# EUROPÄISCHE PATENTSCHRIFT

(11) **EP 0 842 815 B1**
(45) Veröffentlichungstag und Bekanntmachung des Hinweises auf die Patenterteilung: **02.10.2002**
(21) Anmeldenummer: 97111087.9
(22) Anmeldetag: 03.07.1997
(51) Int. Cl.: B60N 3/10

(54) **Aufnahmevorrichtung für Gegenstände in Fahrzeugen**
Device for receiving objects in vehicles
Dispositif de réception d'objects pour véhicules.

(30) Priorität: 13.11.1996 DE 19646778
(43) Veröffentlichungstag der Anmeldung: 20.05.1998
(73) Patentinhaber: Siemens Aktiengesellschaft, 80333 München (DE)
(72) Erfinder: Schmiedl, Walter, 60437 Frankfurt (DE)
(74) Vertreter: Berg, Peter

(56) Entgegenhaltungen:
- EP-A- 0 633 162
- DE-A- 4 415 732
- US-A- 4 728 018
- US-A- 4 783 037
- US-A- 5 228 611
- US-A- 5 379 978

## Beschreibung

Die Erfindung betrifft eine Aufnahmevorrichtung für Gegenstände, insbesondere Gefäße, in Fahrzeugen gemäß dem Oberbegriff des Anspruchs 1. Eine solche Aufnahmevorrichtung offenbart US-A-5379978.

Derartige Aufnahmevorrichtungen sind aus dem Einsatz in Fahrzeugen verschiedenster Art bekannt. Sie gewährleisten, daß Gegenstände trotz der im Betrieb der Fahrzeuge - aufgrund von z.B. Beschleunigungsvorgängen - auftretenden Bewegungen sicher an ihrem Platz gehalten werden. Entsprechende Aufnahmevorrichtungen werden z.B. als Becherhalter in Kraftfahrzeugen verwendet. Dem Fahrzeugführer und weiteren Insassen wird damit die Möglichkeit gegeben, während der Fahrt Getränke aufzunehmen, ohne wiederverschließbare Gefäße verwenden zu müssen und ohne der Gefahr ausgesetzt zu sein, daß eine in einem offenen Behälter befindliche Flüssigkeit während der Fahrt bei einem unsicheren Stand des Behälters aus diesem in den Fahrzeuginnenraum hinaustritt.

Neben einer den üblichen Formen und Abmessungen von Getränkebehältern mehr oder weniger angepaßten Aussparung ist bei solchen Becherhaltern die Höhe wichtig, auf welcher die Gefäße abgestützt werden. Ist die Stützhöhe zu gering, können Kippbewegungen nicht hinreichend abgefangen werden und der Becher droht umzufallen. Daher weisen bekannte Aufnahmevorrichtungen für Gegenstände in Fahrzeugen eine nicht unerhebliche Bauhöhe auf.

Um Halter vorgenannter Aufnahmevorrichtungen nicht ständig im Fahrzeuginnenraum präsent zu haben, sondern nur im Bedarfsfall nutzen zu können, ist es bekannt, diese in Form einer Schublade, welche im Fall einer Nichtbenutzung z.B. in eine Innenraumverkleidung eines Fahrzeugs eingeschoben wird, auszuführen. Aufgrund der oben erwähnten erforderlichen großen Bauhöhe eines solchen Schubladenhalters ist für dessen Unterbringung in einer Instrumententafel erheblicher Bauraum notwendig.

Eine andere bekannte Ausführungsform eines Becherhalters sieht vor, diesen in die Mittelkonsole eines Fahrzeugs zu integrieren und mit einem als Klappe ausgebildeten Deckel zu versehen. Diese Ausführungsform weist den Nachteil auf, daß auch im Fall der Nichtbenutzung des Halters sehr viel Einbauraum, der z.B. für Instrumente, Bedienelemente oder Kleinteilablagen benötigt wird, in dem Fahrzeug verlorengeht, da der Becherhalter - gebunden an die Grundfläche der abzustützenden Gegenstände - eine große Einbaufläche in der Fahrzeugmittelkonsole beansprucht.

Der Erfindung liegt die Aufgabe zugrunde, eine Aufnahmevorrichtung für Gegenstände in Fahrzeugen mit einem Halter zu liefern, welche Aufnahmevorrichtung trotz geringer Einbauhöhe und somit geringem beanspruchten Einbauraum eine große Stützhöhe zum sicheren Abstützen und Halten der Gegenstände aufweist.

Diese Aufgabe wird erfindungsgemäß mit Hilfe der Merkmale des kennzeichnenden Teils des Anspruchs 1.

Aufgrund einer solchen Ausbildung kann die Innenhöhe des Gehäuses, die ein Maß für den Platzbedarf der Aufnahmevorrichtung im nicht benutzten Zustand ist, sehr niedrig gewählt werden. Die für eine hohe Funktionalität der Vorrichtung entscheidende Stützhöhe des Halters jedoch entfaltet sich erst, wenn der Halter seine Ruheposition verläßt und eine Stellung einnimmt, in der er geeignet ist, Gegenstände aufzunehmen. Mit einer erfindungsgemäßen Aufnahmevorrichtung wird auf diese Weise eine sehr hohe Funktionalität bei gleichzeitig minimalem freizuhaltenden Einbauraum erzielt. Eine erfindungsgemäße Aufnahmevorrichtung ist gleichermaßen einsetzbar in allen Arten von Fahrzeugen zu Land, in der Luft und im Wasser. Auch bei stark eingeengten Cockpit- und/oder Innenraum-Verhältnissen muß mit der vorliegenden Erfindung nicht auf eine Aufnahmevorrichtung für Gegenstände, z.B. Gefäße, Kleinteile jeglicher Art, Telekommunikationsgeräte oder ähnliches, verzichtet werden. Insbesondere sei in diesem Zusammenhang auf einen möglichen Einsatz in Schienen- oder Luftfahrzeugen hingewiesen, wo aufgrund der Notwendigkeit, möglichst viele Passagiere in einer Fahrzeugeinheit transportieren können zu müssen, eine maximale Raumausnutzung besonders im Vordergrund steht.

Für den geringen Raumbedarf einer erfindungsgemäßen Vorrichtung erweist es sich als besonders vorteilhaft, daß der Halter - entgegen einem oben angegebenen Stand der Technik mit einem von oben beladbaren, mit einem Deckel versehenen und somit verdeckbaren Halter - in ein Gehäuse einführbar ist. In einer vorteilhaften Ausgestaltung ist der Halter ein Drehbauteil und sich um eine im wesentlichen vertikale Achse drehend in das Gehäuse einführbar. Vorzugsweise wird der Halter jedoch von einem Schubladenbauteil gebildet und ist durch Einschieben in das Gehäuse einführbar.

Das Gehäuse selbst kann in sehr einfacher Weise als ein schlauch- oder rahmenförmiger Schacht ausgeführt sein, wenn es auf der der Einführöffnung gegenüberliegenden Seite offen ist.

Vorteilhaft ist es, wenn die zumindest eine Ausnehmung des Halters in dem oberen Schenkel des "U" oder "V" ausgebildet ist, wobei der untere Schenkel eine Bodenplatte ist. So ist eine sichere Aufnahme des zu haltenden Gegenstandes sowohl nach unten als auch in seitlicher Richtung gewährleistet. Insbesondere zur Aufnahme konischer Gegenstände oder zur Verbesserung der Einführbarkeit beliebiger Gegenstände kann der Rand der Ausnehmung konisch ausgebildet sein.

In einer besonders einfachen Ausführungsform einer Aufnahmevorrichtung nach der Erfindung sind die Schenkel des "U" oder "V" des Halters ein einziges Bauteil bildend miteinander verbunden. Fertigungs- und Montageaufwand für eine solche Vorrichtung sind minimiert. Dennoch kann es in bestimmten Einsatzfällen auch vorteilhaft sein, wenn die Schenkel des "U" oder "V" des Halters über ein Scharnierelement miteinander verbunden sind. Bei beiden vorgenannten Ausführungsformen sind vorzugsweise ein oder beide Schenkel des "U" oder "V" des Halters ihre freien Enden voneinander weg bewegend federnd beaufschlagt. Die den oder die Schenkel des "U" oder "V" des Halters beaufschlagende Federkraft kann durch eine Druckfeder - z.B. eine Spiralfeder, ein hydraulisches oder ein pneumatisches Druckelement - hervorgerufen sein. Besonders günstig ist es jedoch, die Schenkel des "U" oder "V" des Halters durch Biegespannung in ihrem die Schenkel verbindenden Biegebereich zu beaufschlagen. In diesem Zusammenhang bietet es Vorteile, wenn zumindest einer der Schenkel des "U" oder "V" des Halters aus einem federelastischen Werkstoff besteht. Eine solche Ausführungsform eines Halters ist besonders kostengünstig und einfach herzustellen, so daß sie insbesondere für eine Produktion in größeren Serien in Frage kommt.

Von besonderem Vorteil ist es, wenn zumindest einer der Schenkel des "U" oder "V" des Halters aus Metall oder aus einem Verbundwerkstoff besteht. Es ist aber auch denkbar, hierfür einen Kunststoff vorteilhaft einzusetzen.

Besonders interessant ist die Erstellung des Halters aus einem gestanzten und gekanteten und/oder gebogenen plattenförmigen Material. Wird für dieses Material ein federelastischer Werkstoff verwendet, so sind auf diese Weise trotz einfachster Herstellung hervorragende Federeigenschaften zu erreichen, die dafür sorgen, daß der Aufnahmebereich des Halters beim Verlassen des Gehäuses sofort und sicher seine Arbeitsposition einnimmt.

Der Einsatz verschiedener Werkstoffe für die Schenkel des Halters kann besonders dann interessant und vorteilhaft sein, wenn die beiden Schenkel nicht ein einziges Bauteil bildend verbunden sind. Die Wahl des Materials kann dann abhängig von den für das jeweilige Element günstigsten Materialeigenschaften getroffen werden.

Wie oben bereits beschrieben, dient die zumindest eine Ausnehmung in dem Aufnahmebereich des Halters als Aufnahme für die zu haltenden bzw. abzustützenden Gegenstände. Um diese Haltefunktion weiter zu verbessern, ist es besonders vorteilhaft, den Rand der Ausnehmung mit einer Erhöhung zu versehen, um eine vergrößerte Stütz- bzw. Haltefläche zu erhalten. Vorzugsweise erstreckt sich diese Erhöhung etwa axial zu der zugehörigen Ausnehmung und verläuft ganz oder teilweise an dem Rand dieser Ausnehmung um.

Darüber hinaus kann die zumindest eine Ausnehmung der in der Regel runden Grund- und Querschnittsfläche der aufzunehmenden Gegenstände angepaßt sein. Um aber einen möglichst universell einsetzbaren Halter zu erhalten, der nicht nur für die Aufnahme von zylindrischen Gegenständen besonders gut geeignet ist, können die Ausnehmungen auch vier- oder mehreckig sein, und eine vorerwähnte Erhöhung des Rands der zumindest einen Ausnehmung bietet sich besonders an, wenn der Aufnahmebereich des Halters gegenüber einer als Stellfläche für den Gegenstand dienenden Bodenplatte geneigt ist.

Um zu verhindern, daß der Halter, wenn er in seine Betriebsstellung gebracht wird, unbeabsichtigt aus dem Gehäuse herausgezogen wird oder daß er aus der Betriebsstellung unbeabsichtigt in das Gehäuse eingeführt wird, besitzt der Halter und/oder das Gehäuse zumindest einen Anschlag, gegen den oder in dem der Halter in Betriebsstellung anlegbar oder arretierbar ist. In einer besonderen Ausführungsform besitzt der Halter zumindest einen Anschlag, der in Betriebsstellung mit zumindest einer jeweiligen Aussparung oder Körperkante des Gehäuses in Eingriff ist. Durch Niederdrücken vorgenannten Sicherungsanschlags (d.h. durch Drücken der Schenkel des Halters gegeneinander) kommt der Anschlag außer Eingriff, so daß der Halter komplett aus dem Gehäuse herausgezogen werden kann. In umgekehrter Weise erfolgt ein Wiedereinsetzen des Halters in das Gehäuse.

Darüber hinaus kann es vorteilhaft sein, wenn das Gehäuse zumindest einen Anschlag besitzt, der in Betriebsstellung mit zumindest einer jeweiligen Aussparung oder Körperkante, z.B. dem Scharnierelement des Halters in Eingriff ist. Hier kann z.B. in besonders einfacher Weise der Anschlag durch ein eingedrücktes Teil des Gehäuses gebildet sein, bei welcher Ausführungsform jedoch eine Demontage von Halter und Gehäuse erschwert ist. Denkbar sind aber zum Beispiel - eine Demontage erleichtemd - auch in das Gehäuse als Anschlag eingesetzte Bolzen oder Schrauben.

Vorzugsweise weist der Halter eine an dem freien Ende eines Schenkels angeordnete Frontplatte auf, mit der die Einführöffnung des Gehäuses abdeckbar ist. Es bietet sich an, daß die Frontplatte Endanschlag für das Einführen des Halters in das Gehäuse ist und gegen einen Frontrahmen des Gehäuses anlegbar ist. Vorzugsweise ist in der Frontplatte ein Griff integriert, damit der Halter durch Herausziehen aus dem Gehäuse in seine Betriebsposition gebracht werden kann.

Der Aufbau der erfindungsgemäßen Aufnahmevorrichtung wird besonders einfach, wenn der Halter in dem Gehäuse gleitgeführt ist. Vorteilhaft, jedoch in der Herstellung aufwendiger, ist das Vorsehen einer Wälzlagerung zwischen Halter und Gehäuse, zum Beispiel mit Hilfe von Rollen. Um ein unbeabsichtigtes Herausrutschen des Halters aus dem Gehäuse unmöglich zu machen, ist der Halter im eingeführten Zustand in dem Gehäuse vorzugsweise lagesicherbar. Diese Lagesicherung ist in besonders vorteilhafter Weise eine Rastvorrichtung. Insbesondere notwendig ist eine solche Lagesicherung dann, wenn der Halter gegen eine Federkraft in das Gehäuse einführbar ist. Das Aufbringen einer solchen Federkraft, hervorgerufen durch eine z.B. mechanisch, hydraulisch oder pneumatisch wirkende Feder, bietet den besonderen Vorteil einer ausgesprochen bedienerfreundlichen Ausführung der Aufnahmevorrichtung: Um den Halter zur Aufnahme von Gegenständen bereitzustellen, ist dann lediglich erforderlich, die Lagesicherung/Rastvorrichtung- z.B. auf Knopfdruck - zu entriegeln. Der Halter wird dann automatisch aus dem Gehäuse herausgeschoben. Besonders vorteilhaft und komfortabel ist es, wenn der Halter motorisch in dem Gehäuse bewegbar ist.

Das Gehäuse der Aufnahmevorrichtung ist vorzugsweise in eine Instrumententafel, eine Mittelkonsole oder eine Innenverkleidung eines Kraftfahrzeugs einbaubar. In einer besonders vorteilhaften Ausgestaltung kann das Gehäuse jedoch auch bereits integraler Bestandteil einer Instrumententafel, einer Mittelkonsole oder einer Innenverkleidung eines Kraftfahrzeugs sein. Zur Komplettierung der Aufnahmevorrichtung wäre es dann nur noch notwendig, den Halter in den vorgesehenen Gehäuseschacht einzuführen. Wird ein Halter für Gegenstände hingegen für die Ausstattung des Fahrzeugs nicht gewünscht. so läßt sich der Gehäuseschacht durch eine Blende einfach abdecken oder für andere Vorrichtungen oder Geräte nutzen.

In einer besonders einfach aufgebauten Ausführungsform einer Aufnahmevorrichtung nach der Erfindung ist die gelenkige Verbindung der Schenkel des "U" oder "V" des Halters in dem Verbindungsbereich des "U" oder "V" angeordnet. Ohne etwaige Einbußen an Funktionalität kann diese gelenkige Verbindung jedoch auch in einem von dem Verbindungsbereich des "U" oder "V" beabstandeten Bereich angeordnet sein. Letzteres kann z.B. dann besonders vorteilhaft sein, wenn der Aufnahmebereich des Halters und die Bodenplatte einschließlich weiterer Halterelemente im Verbindungsbereich des "U" oder "V" aufgrund gewünschter unterschiedlicher Materialeigenschaften aus verschiedenen Werkstoffen bestehen.

Die Erfindung wird im folgenden anhand von in den beigefügten Zeichnungen dargestellten Ausführungsbeispielen näher erläutert. Es zeigt
- Figur 1: eine erfindungsgemäße Aufnahmevorrichtung in perspektivischer Darstellung und
- Figur 2: eine weitere Ausführungsform einer erfindungsgemäßen Vorrichtung in perspektivischer Darstellung.

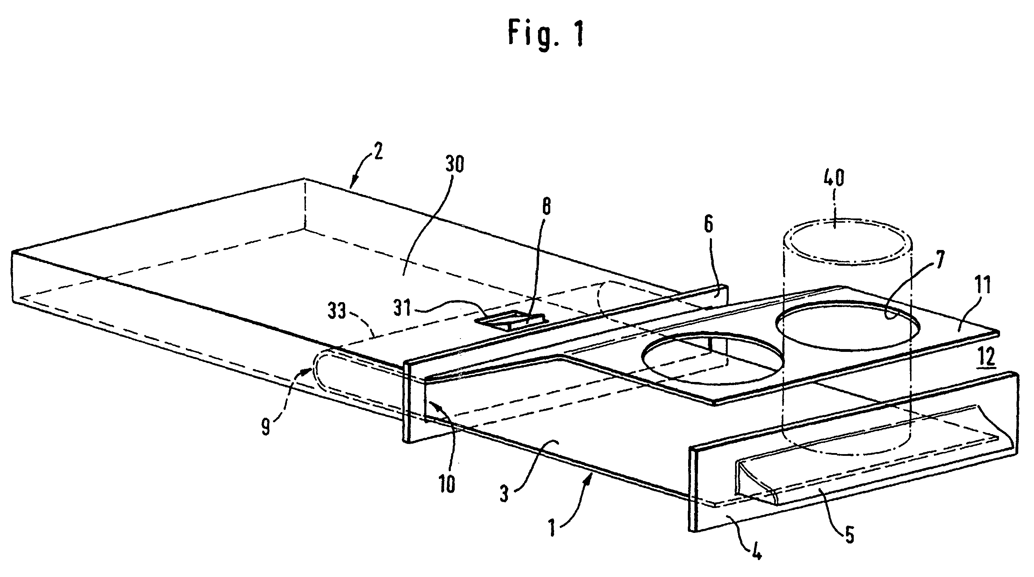

Die in Figur 1 gezeigte Aufnahmevorrichtung für Gegenstände mit einem Halter weist einen als Schubladenbauteil ausgebildeten U-förmigen Halter 1 auf, der in ein Gehäuse 2 eingesetzt ist. Das Gehäuse 2 dient zur Anbringung des Halters 1 in einem Fahrzeug und ist zum Beispiel in eine Instrumententafel oder eine Passagiersitzverkleidung eingebaut.

Zur Bewegung des in dem Gehäuse gleitgeführten Halters 1 besitzt dieser einen an eine Frontplatte 4 angeformten Griff 5. Die Frontplatte 4 kommt im eingeführten Zustand des Halters 1 an einem Frontrahmen 6 des Gehäuses 2 zum Anschlag. Beim Herausziehen des Halters dient ein in eine Aussparung 31 in einer Gehäusedecke 30 des Gehäuses 2 einrastender Anschlag 8 als Sicherung gegen ein unbeabsichtigtes, vollständiges Herausziehen des Halters aus dem Gehäuse. Gleichzeitig dient der Anschlag 8 als Widerstand gegen ein unbeabsichtigtes Eingleiten des Halters in das Gehäuse. In seiner herausgezogenen Position (Betriebsstellung) ist der Halter 1 somit lagegesichert.

Eine als unterer Schenkel des U-förmigen Halters 1 ausgebildete Bodenplatte 3 dient zum Abstellen eines Gegenstandes 40. Der Gegenstand 40, der in diesem Ausführungsbeispiel zylindrisch ist und zum Beispiel ein Trinkgefäß sein kann, ist in eine in dem oberen Schenkel des Halters 1 in einem Aufnahmebereich 11 vorhandene Ausnehmung 7 eingesetzt. Eine hohe Standfestigkeit des Gegenstandes 40 wird durch eine große Stützhöhe zwischen Bodenplatte 3 und Aufnahmebereich 11 erreicht.

Halter 1 ist als Einbauteil aus einem gestanzten, gebogenen und gekanteten Blechstreifen hergestellt. Halter 1 könnte aber z. B. auch ein Kunststoffteil gleicher Form und mit entsprechenden Federeigenschaften sein. Ein in dem Verbindungsbereich 9 der Schenkel des U-förmigen Halters plazierter Biegebereich 33, in welchem der Blechstreifen um 180° umgebogen ist, federt den oberen Schenkel gegenüber dem unteren Schenkel ab. Beim Einschieben des Halters 1 in das Gehäuse 2 wird der obere Schenkel an der oberen Innenkante der Einführöffnung 10 in Richtung des unteren Schenkels gedrückt. Beim Herausziehen des Halters 1 aus dem Gehäuse 2 erfolgt aufgrund der Federwirkung eine automatische Bewegung der beiden Schenkel des Halters in entgegengesetzter Richtung, eine Öffnung 12 bildend. Es ergibt sich so eine große Stützhöhe für die zu haltenden Gegenstände bei einer nur geringen Einbauhöhe der Aufnahmevorrichtung in dem Fahrzeug.

Ein Einsetzen oder eine Entnahme des Halters 1 in das bzw. aus dem Gehäuse 2 ist sehr einfach bei heruntergedrücktem oberen Schenkel oder Aufnahmebereich 11 auszuführen, wodurch Anschlag 8 und Aussparung 31 außer Eingriff kommen.

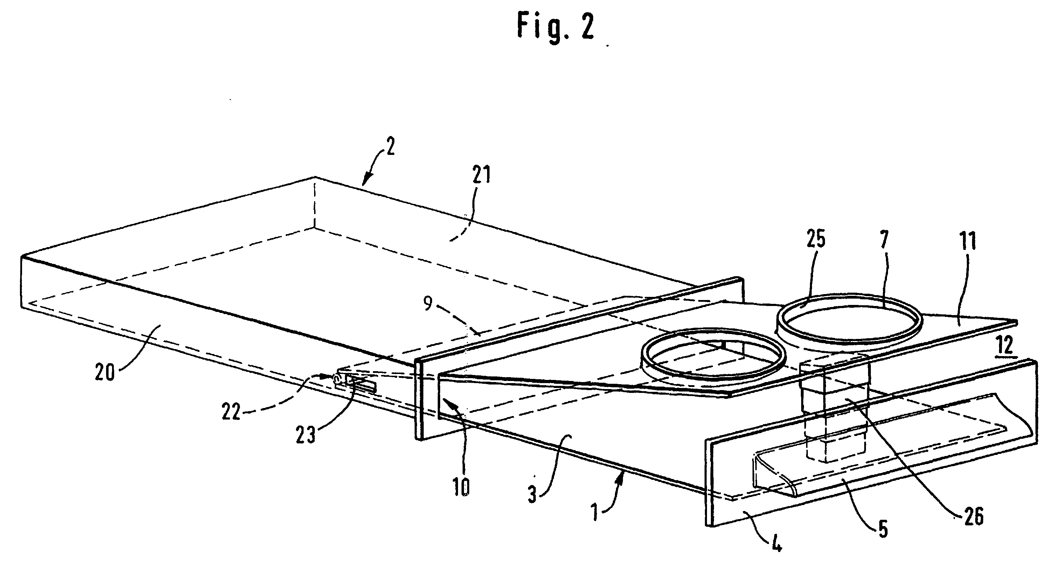

Ein weiteres Ausführungsbeispiel einer erfindungsgemäßen Aufnahmevorrichtung ist in Figur 2 dargestellt. Entsprechende Bauteile sind dabei mit gleichen Bezugszeichen versehen.

Hier ist Halter 1 V-förmig ausgebildet, wobei die Verbindung des unteren Schenkels mit dem oberen Schenkel mit Hilfe eines Scharnierelements 22 verwirklicht ist. Eine Druckfeder 26, vertikal angeordnet zu Bodenplatte 3 und Aufnahmebereich 11, bringt hier den Aufnahmebereich 11 in seine Betriebsstellung. Es ist aber z.B. auch möglich, anstelle der Feder 26 eine entsprechende Feder in das Scharnierelement 22 zu integrieren.

Da bei diesem Ausführungsbeispiel der Aufnahmebereich 11 in der Betriebsstellung eine Neigung gegenüber der Bodenplatte 3 aufweist, sind die Ausnehmungen 7 an ihrem Rand hangabwärts mit Erhöhungen 25 zur Verbesserung der Standfestigkeit nicht dargestellter, von oben in die Ausnehmungen 7 einzuführender Gegenstände versehen.

Für den mit der Kraft der Feder 26 aufgerichteten oberen Schenkel mit dem Aufnahmebereich 11 des Halters bildet die obere Innenkante der Einführöffnung 10 des Gehäuses 2 einen Anschlag.

Ein Anschlag 23 sichert den Halter 1 gegen unbeabsichtigtes Herausziehen aus dem Gehäuse 2. Der Anschlag 23 ist durch Herausdrücken eines Segments einer Gehäuseseitenwand 20 gebildet. Ein entsprechender Anschlag kann auch an einer Gehäuseseitenwand 21 vorgesehen sein. Eine Sicherung gegen unbeabsichtigtes Eingleiten des Halters 1 in das Gehäuse 2 besteht durch den mit Federkraft an der oberen Innenkante der Einführöffnung 10 anliegenden, nach außen hin ansteigenden oberen Schenkel des V-förmigen Halters.

## Patentansprüche

1. Aufnahmevorrichtung für Gegenstände (40), insbesondere Gefäße, in Fahrzeugen mit einem Halter (1), der einen Aufnahmebereich (11) aufweist, und mit einem Gehäuse (2) mit einer nach außen hin mündenden Einführöffnung (10), wobei der Halter (1) in das Gehäuse (2) einführbar ist und der Aufnahmebereich (11) des Halters (1) zumindest eine Ausnehmung (7) als Aufnahme für die Gegenstände (40) aufweist und wobei der Halter (1) etwa U- oder V-förmig mit übereinanderliegenden Schenkeln ausgebildet ist und mit dem Verbindungsbereich (9) des "U" oder "V" voran in die Einführöffnung (10) des Gehäuses (2) einführbar ist und die Schenkel des "U" oder "V" gelenkig verbunden sind, **dadurch gekennzeichnet, daß** der Aufnahmebereich (11) des Halters (1) in einem der Öffnung (12) des "U" oder "V" näheren Bereich des Halters (1) angeordnet ist und daß die Schenkel des "U" oder "V" des Halters (1) ein einziges Bauteil bildend miteinander verbunden sind.

2. Aufnahmevorrichtung nach Anspruch 1, **dadurch gekennzeichnet, daß** der Halter ein Drehbauteil ist und sich um eine im wesentlichen vertikale Achse drehend in das Gehäuse einführbar ist.

3. Aufnahmevorrichtung nach Anspruch 1, **dadurch gekennzeichnet, daß** der Halter (1) ein Schubladenbauteil ist und durch Einschieben in das Gehäuse (2) einführbar ist.

4. Aufnahmevorrichtung nach einem der vorhergehenden Ansprüche, **dadurch gekennzeichnet, daß** das Gehäuse (2) einen auf der der Einführöffnung (10) gegenüberliegenden Seite offenen Schacht bildet.

5. Aufnahmevorrichtung nach einem der vorhergehenden Ansprüche, **dadurch gekennzeichnet, daß** die zumindest eine Ausnehmung (7) des Halters (1) in dem oberen Schenkel des "U" oder "V" ausgebildet ist, wobei der untere Schenkel eine Bodenplatte (3) ist.

6. Aufnahmevorrichtung nach einem der vorhergehenden Ansprüche, **dadurch gekennzeichnet, daß** der Rand der zumindest einen Aushnehmung (7) konisch ausgebildet ist.

7. Aufnahmevorrichtung nach einem der vorhergehenden Ansprüche, **dadurch gekennzeichnet, daß** ein oder beide Schenkel des "U" oder "V" des Halters (1) ihre freien Enden voneinander weg bewegend federnd beaufschlagt sind.

8. Aufnahmevorrichtung nach Anspruch 7, **dadurch gekennzeichnet, daß** der oder die Schenkel des "U" oder "V" des Halters (1) durch eine Druckfeder (26) beaufschlagt ist oder sind.

9. Aufnahmevorrichtung nach einem der Ansprüche 7 oder 8, **dadurch gekennzeichnet, daß** die Schenkel des "U" oder "V" des Halters (1) durch Biegespannung in ihrem die Schenkel verbindenden Biegebereich (33) beaufschlagt sind.

10. Aufnahmevorrichtung nach einem der vorhergehenden Ansprüche, **dadurch gekennzeichnet, daß** zumindest einer der Schenkel des "U" oder "V" des Halters (1) aus einem federelastischen Werkstoff besteht.

11. Aufnahmevorrichtung nach einem der vorhergehenden Ansprüche, **dadurch gekennzeichnet, daß** zumindest einer der Schenkel des "U" oder "V" des Halters (1) aus Metall oder aus einem Verbundwerkstoff besteht.

12. Aufnahmevorrichtung nach einem der vorhergehenden Ansprüche, **dadurch gekennzeichnet, daß** zumindest einer der Schenkel des "U" oder "V" des Halters (1) aus Kunststoff besteht.

13. Aufnahmevorrichtung nach einem der vorhergehenden Ansprüche, **dadurch gekennzeichnet, daß** der Halter (1) aus einem gestanzten und gekanteten und/oder gebogenen plattenförmigen Material besteht.

14. Aufnahmevorrichtung nach einem der vorhergehenden Ansprüche, **dadurch gekennzeichnet, daß** der Rand der zumindest einen Ausnehmung (7) mit einer Erhöhung (25) versehen ist.

15. Aufnahmevorrichtung nach Anspruch 14, **dadurch gekennzeichnet, daß** die Erhöhung (25) sich etwa axial zu der zugehörigen Ausnehmung (7) erstreckt.

16. Aufnahmevorrichtung nach einem der Ansprüche 14 oder 15, **dadurch gekennzeichnet, daß** die Erhöhung (25) ganz oder teilweise an dem Rand der zugehörigen Ausnehmung (7) umläuft.

17. Aufnahmevorrichtung nach einem der vorhergehenden Ansprüche, **dadurch gekennzeichnet, daß** der Halter (1) und/oder das Gehäuse (2) zumindest einen Anschlag besitzt, gegen den oder in dem der Halter (1) in Betriebsstellung anlegbar oder arretierbar ist.

18. Aufnahmevorrichtung nach Anspruch 17, **dadurch gekennzeichnet, daß** der Halter (1) zumindest einen Anschlag (8) besitzt, der in Betriebsstellung mit zumindest einer jeweiligen Aussparung (31) oder Körperkante des Gehäuses (2) in Eingriff ist.

19. Aufnahmevorrichtung nach einem der Ansprüche 17 oder 18, **dadurch gekennzeichnet, daß** das Gehäuse (2) zumindest einen Anschlag (23) besitzt, der in Betriebsstellung mit zumindest einer jeweiligen Aussparung oder Körperkante (Scharnierelement 22) des Halters (1) in Eingriff ist.

20. Aufnahmevorrichtung nach einem der vorhergehenden Ansprüche, **dadurch gekennzeichnet, daß** der Halter (1) eine an dem freien Ende eines Schenkels angeordnete Frontplatte (4) aufweist, mit der die Einführöffnung (10) des Gehäuses (2) abdeckbar ist.

21. Aufnahmevorrichtung nach Anspruch 20, **dadurch gekennzeichnet, daß** die Frontplatte (4) Endanschlag für das Einführen des Halters (1) in das Gehäuse (2) ist und gegen einen Frontrahmen (6) des Gehäuses (2) anlegbar ist.

22. Aufnahmevorrichtung nach einem der Ansprüche 20 oder 21, **dadurch gekennzeichnet, daß** in der Frontplatte (4) ein Griff (5) integriert ist.

23. Aufnahmevorrichtung nach einem der vorhergehenden Ansprüche, **dadurch gekennzeichnet, daß** der Halter (1) in dem Gehäuse (2) gleitgeführt ist.

24. Aufnahmevorrichtung nach einem der Ansprüche 1 bis 22, **dadurch gekennzeichnet, daß** der Halter (1) in dem Gehäuse (2) wälzlagergeführt ist.

25. Aufnahmevorrichtung nach einem der vorhergehenden Ansprüche, **dadurch gekennzeichnet, daß** der Halter (1) im eingeführten Zustand in dem Gehäuse (2) lagesicherbar ist.

26. Aufnahmevorrichtung nach Anspruch 25, **dadurch gekennzeichnet, daß** die Lagesicherung eine Rastvorrichtung ist.

27. Aufnahmevorrichtung nach einem der Ansprüche 25 oder 26, **dadurch gekennzeichnet, daß** der Halter (1) gegen eine Federkraft in das Gehäuse (2) einführbar ist.

28. Aufnahmevorrichtung nach einem der vorhergehenden Ansprüche, **dadurch gekennzeichnet, daß** der Halter (1) motorisch in dem Gehäuse (2) bewegbar ist.

29. Aufnahmevorrichtung nach einem der vorhergehenden Ansprüche, **dadurch gekennzeichnet, daß** das Gehäuse (2) in eine Instrumententafel, eine Mittelkonsole oder eine Innenverkleidung eines Kraftfahrzeugs einbaubar ist.

30. Aufnahmevorrichtung nach einem der Ansprüche 1 bis 28, **dadurch gekennzeichnet, daß** das Gehäuse (2) integraler Bestandteil einer instrumententafel, einer Mittelkonsole oder einer Innenverkleidung eines Kraftfahrzeugs ist.

31. Aufnahmevorrichtung nach einem der vorhergehenden Ansprüche, **dadurch gekennzeichnet, daß** die gelenkige Verbindung der Schenkel des "U" oder "V" des Halters (1) in dem Verbindungsbereich (9) des "U" oder "V" angeordnet ist.

32. Aufnahmevorrichtung nach einem der Ansprüche 1 bis 30, **dadurch gekennzeichnet, daß** die gelenkige Verbindung der Schenkel des "U" oder "V" des Halters (1) in einem von dem Verbindungsbereich (9) des "U" oder "V" beabstandeten Bereich angeordnet ist.

## Claims

1. Device for accommodating objects (40), in particular vessels, in vehicles, having a holder (1), which has an accommodating region (11), and having a housing (2) with an introduction opening (10), which opens out in the outward direction, it being the case that the holder (1) can be introduced into the housing (2) and the accommodating region (11) of the holder (1) has at least one cut-out (7) as a means for accommodating the object (40), and that the holder (1) is of approximately U-shaped or V-shaped design with legs located one above the other and can be introduced into the introduction opening (10) of the housing (2) with the connection region (9) of the "U" or "V" in front and the legs of the "U" or "V" are connected in an articulated manner, **characterized in that** the accommodating region (11) of the holder (1) is arranged in a region of the holder (1) which is in the vicinity of the opening (12) of the "U" or "V", and **in that** the legs of the "U" or "V" of the holder (1) are connected to one another to form a single component.

2. Accommodating device according to Claim 1, **characterized in that** the holder is a rotary component and can be introduced into the housing with rotary action about an essentially vertical axis.

3. Accommodating device according to Claim 1, **characterized in that** the holder (1) is a drawer component and can be introduced into the housing (2) by being pushed in.

4. Accommodating device according to one of the preceding claims, **characterized in that** the housing (2) forms a shaft which is open on the side located opposite the introduction opening (10).

5. Accommodating device according to one of the preceding claims, **characterized in that** the at least one cut-out (7) of the holder (1) is formed in the top leg of the "U" or "V", the bottom leg being a base plate (3).

6. Accommodating device according to one of the preceding claims, **characterized in that** the border of the at least one cut-out (7) is of conical design.

7. Accommodating device according to one of the preceding claims, **characterized in that** one or both legs of the "U" or "V" of the holder (1) is/are subjected to resilient action which moves their free ends away from one another.

8. Accommodating device according to Claim 7, **characterized in that** the leg or legs of the "U" or "V" of the holder (1) is/are subjected to the action of a compression spring (26).

9. Accommodating device according to either of Claims 7 and 8, **characterized in that** the legs of the "U" or "V" of the holder (1) are subjected to bending stressing in their bending region (33), which connects the legs.

10. Accommodating device according to one of the preceding claims, **characterized in that** at least one of the legs of "U" or "V" of the holder (1) consists of a resiliently elastic material.

11. Accommodating device according to one of the preceding claims, **characterized in that** at least one of the legs of the "U" or "V" of the holder (1) consists of metal or of a composite material.

12. Accommodating device according to one of the preceding claims, **characterized in that** at least one of the legs of the "U" or "V" of the holder (1) consists of plastic.

13. Accommodating device according to one of the preceding claims, **characterized in that** the holder (1) consists of a punched and folded and/or bent plate-like material.

14. Accommodating device according to one of the preceding claims, **characterized in that** the border of the at least one cut-out (7) is provided with an elevation (25).

15. Accommodating device according to Claim 14, **characterized in that** the elevation (25) extends approximately axially in relation to the associated cut-out (7).

16. Accommodating device according to either of Claims 14 and 15, **characterized in that** the elevation (25) runs wholly or partially around the border of the associated cut-out (7).

17. Accommodating device according to either of the preceding claims, **characterized in that** the holder (1) and/or the housing (2) have/has at least one stop against which the holder (1) can be positioned, or in which the holder (1) can be arrested, in the use position.

18. Accommodating device according to Claim 17, **characterized in that** the holder (1) has at least one stop (8) which, in the use position, is in engagement with at least one respective cut-out (31) or body edge of the housing (2).

19. Accommodating device according to either of Claims 17 and 18, **characterized in that** the housing (2) has at least one stop (23) which, in the use position, is in engagement with at least one respective cut-out or body edge (hinge element 22) of the holder (1).

20. Accommodating device according to one of the preceding claims, **characterized in that** the holder (1) has a front plate (4) which is arranged at the free end of a leg and by means of which the introduction opening (10) of the housing (2) can be covered.

21. Accommodating device according to Claim 20, **characterized in that** the front plate (4) is an end stop for the introduction of the holder (1) into the housing (2) and can be positioned against a front frame (6) of the housing (2).

22. Accommodation device according to either of Claims 20 and 21, **characterized in that** a handle (5) is integrated in the front plate (4).

23. Accommodating device according to one of the preceding claims, **characterized in that** the holder (1) is guided with sliding action in the housing (2).

24. Accommodating device according to one of Claims 1 to 22, **characterized in that** the holder (1) is guided by rolling-contact bearings in the housing (2).

25. Accommodating device according to one of the preceding claims, **characterized in that** the holder (1) can be secured in position once introduced in the housing (2).

26. Accommodating device according to Claim 25, **characterized in that** the position-securing means is a latching device.

27. Accommodating device according to either of Claims 25 and 26, **characterized in that** the holder (1) can be introduced into the housing (2) counter to a spring force.

28. Accommodating device according to one of the preceding claims, **characterized in that** the holder (1) can be moved in a motor-driven manner in the housing (2).

29. Accommodating device according to one of the preceding claims, **characterized in that** the housing (2) can be installed in a dashboard, a centre console or an interior covering of a motor vehicle.

30. Accommodating device according to one of Claims 1 to 28, **characterized in that** the housing (2) is an integral constituent part of a dashboard, of a centre console or of an interior covering of the motor vehicle.

31. Accommodating device according to one of the preceding claims, **characterized in that** the articulated connection of the legs of the "U" or "V" of the holder (1) is arranged in the connection region (9) of the "U" or "V".

32. Accommodating device according to one of Claims 1 to 30, **characterized in that** the articulated connection of the legs of the "U" or "V" of the holder (1) is arranged in a region which is spaced apart from the connection region (9) of the "U" or "V".

## Revendications

1. Dispositif de logement pour objets (40), en particulier pour récipients, dans des véhicules, comprenant un support (1) qui présente une région de logement (11) et un boîtier (2) présentant une ouverture d'entrée (10) qui débouche vers l'extérieur, le support (1) pouvant être introduit dans le boîtier (2) et la région de logement (11) du support (1) présentant au moins un évidement (7) servant de logement pour les objets (40), et le support (1) étant réalisé à peu près en forme de U ou de V possédant des branches placées l'une au-dessus de l'autre et pouvant être engagé dans l'ouverture d'entrée (10) du boîtier (2) avec la région de liaison (9) du « U » ou du « V » en avant, et les branches du « U » ou « V » étant reliées de façon articulée, **caractérisé en ce que** la région de logement (11) du support (1) est disposée dans une région du support (1) qui est proche de l'ouverture (12) du « U » ou « V» et **en ce que** les branches du « U » ou « V » du support (1) sont reliées l'une à l'autre en formant un élément unique.

2. Dispositif de logement selon la revendication 1, **caractérisé en ce que** le support est un élément rotatif et peut être introduit dans boîtier en tournant autour d'un axe sensiblement vertical.

3. Dispositif de logement selon la revendication 1, **caractérisé en ce que** le support (1) est un élément du type tiroir et peut être engagé dans le boîtier (2) par un mouvement de poussée.

4. Dispositif de logement selon une des revendications précédentes, **caractérisé en ce que** le boîtier (2) forme un puits ouvert s'étendant vers l'arrière par rapport à l'ouverture d'entrée (10).

5. Dispositif de logement selon une des revendications précédentes, **caractérisé en ce que** l'au moins un évidement (7) du support (1) est formé dans la branche supérieure du « U» ou « V », la branche inférieure étant une plaque de fond (3).

6. Dispositif de logement selon une des revendications précédentes, **caractérisé en ce que** le bord de l'au moins un évidement (7) est de forme conique.

7. Dispositif de logement selon une des revendications précédentes, **caractérisé en ce qu'**une branche ou les deux branches du « U » ou « V» du support (1) est ou sont sollicitée(s) élastiquement pour écarter leurs extrémités libres l'une de l'autre.

8. Dispositif de logement selon la revendication 7, **caractérisé en ce que** la ou les branches du « U » ou « V » du support (1) est ou sont sollicitée(s) par un ressort de compression (26).

9. Dispositif de logement selon une des revendications 7 ou 8, **caractérisé en ce que** les branches du « U » ou « V » du support (1) sont sollicitées par une contrainte de flexion dans leur région de pliage (33) qui relie les branches.

10. Dispositif de logement selon une des revendications précédentes, **caractérisé en ce qu'**au moins une des branches du « U » ou « V » du support (1) est composée d'une matière élastique à la façon d'un ressort.

11. Dispositif de logement selon une des revendications précédentes, **caractérisé en ce qu'**au moins une des branches du « U » ou « V » du support (1) est faite de métal ou d'une matière composite.

12. Dispositif de logement selon une des revendications précédentes, **caractérisé en ce qu'**au moins une des branches du « U » ou « V » du support (1) est composée de matière plastique.

13. Dispositif de logement selon une des revendications précédentes, **caractérisé en ce que** le support (1) est composé d'une matière en forme de plaque découpée et à bords abattus et/ou pliée.

14. Dispositif de logement selon une des revendications précédentes, **caractérisé en ce que** le bord de l'au moins un évidement (7) est muni d'une surélévation (25).

15. Dispositif de logement selon la revendication 14, **caractérisé en ce que** la surélévation (25) s'étend dans une direction à peu près axiale par rapport à l'évidement (7) correspondant.

16. Dispositif de logement selon une des revendications 14 ou 15, **caractérisé en ce que** la surélévation (25) entoure totalement ou partiellement le bord de l'évidement (7) correspondant.

17. Dispositif de logement selon une des revendications précédentes, **caractérisé en ce que** le support (1) et/ou le boîtier (2) possède(nt) au moins une butée contre laquelle ou dans laquelle le support (1) peut être appuyé ou arrêté dans la position de service.

18. Dispositif de logement selon la revendication 17, **caractérisé en ce que** support (1) possède au moins une butée (8) qui, dans la position de service, est en prise avec au moins un évidement correspondant (31) ou une arête du corps du boîtier (2).

19. Dispositif de logement selon une des revendications 17 ou 18, **caractérisé en ce que** le boîtier (2) possède au moins une butée (23) qui, dans la position de service, est en prise avec au moins un évidement correspondant ou une arête du corps (élément formant charnière 22) du support (1).

20. Dispositif de logement selon une des revendications précédentes, **caractérisé en ce que** le support (1) présente une plaque de façade (4) disposée à l'extrémité libre d'une branche, et avec laquelle l'ouverture d'entrée (10) du boîtier (2) peut être recouverte.

21. Dispositif de logement selon la revendication 20, **caractérisé en ce que** la plaque de façade (4) est une butée de fin de course pour l'introduction du support (1) dans le boîtier (2) et elle peut être appliquée contre un cadre de façade (6) du boiter (2).

22. Dispositif de logement selon une des revendications 20 ou 21, **caractérisé en ce qu'**une poignée (5) est intégrée dans la plaque de façade (4).

23. Dispositif de logement selon une des revendications précédentes, **caractérisé en ce que** le support (1) est guidé à coulissement dans le boîtier (2).

24. Dispositif de logement selon une des revendications 1 à 22, **caractérisé en ce que** le support (1) est guidé dans le boîtier (2) par des portées à roulement.

25. Dispositif de logement selon une des revendications précédentes, **caractérisé en ce que** le support (1) peut être arrêté en position dans le boîtier (2) à l'état rentré.

26. Dispositif de logement selon la revendication 25, **caractérisé en ce que** l'arrêt en position est un dispositif d'encliquetage.

27. Dispositif de logement selon une des revendications 25 ou 26, **caractérisé en ce que** le support (1) peut être introduit dans le boîtier (2) à l'encontre d'une force élastique.

28. Dispositif de logement selon une des revendications précédentes, **caractérisé en ce que** le support (1) peut être mis en mouvement dans le boîtier (2) sous l'action d'un moteur.

29. Dispositif de logement selon une des revendications précédentes, **caractérisé en ce que** le boîtier (2) peut être encastré dans un tableau de bord, une console centrale ou un habillage intérieur d'un véhicule automobile.

30. Dispositif de logement selon une des revendications 1 à 28, **caractérisé en ce que** le boîtier (2) est une partie constitutive intégrée d'un tableau de bord, d'une console centrale ou d'un habillage intérieur d'un véhicule automobile.

31. Dispositif de logement selon une des revendications précédentes, **caractérisé en ce que** la liaison articulée des branches du « U » ou « V » du support (1) est disposée dans la région de liaison (9) du « U » ou « V ».

32. Dispositif de logement selon une des revendications 1 à 30, **caractérisé en ce que** la liaison articulée des branches du « U » ou « V » du support (1) est disposée dans une région éloignée de la région de liaison (9) du « U » ou « V ».
